# FASCICULE DE BREVET EUROPEEN

(11) **EP 0 849 494 B1**
(45) Date de publication et mention de la délivrance du brevet: **27.06.2001**
(21) Numéro de dépôt: 97402762.5
(22) Date de dépôt: 17.11.1997
(51) Int. Cl.: F16F 13/18, F16F 13/10, F16F 13/24

(54) **Support hydroélastique notamment pour la suspension d'un groupe motopropulseur dans la caisse d'un véhicule automobile**
Hydroelastisches Lager, insbesondere zum Lagern einer Antriebseinheit in einem Kfz
Elastic hydraulic support in particular for the mounting of an engine in an automotive vehicle

(30) Priorité: 26.11.1996 FR 9614478
(43) Date de publication de la demande: 24.06.1998
(73) Titulaire: AUTOMOBILES PEUGEOT, 75116 Paris (FR); AUTOMOBILES CITROEN, 92200 Neuilly-sur-Seine (FR)
(72) Inventeur: Le fol, Marcel, 35410 Domloup (FR)
(74) Mandataire: Lanceplaine, Jean-Claude

(56) Documents cités:
- EP-A- 0 278 798
- EP-A- 0 409 707
- EP-A- 0 688 972
- FR-A- 2 702 021
- PATENT ABSTRACTS OF JAPAN vol. 12, no. 149 (M-694), 10 mai 1988 & JP 62 270844 A (HONDA), 25 novembre 1987,
- PATENT ABSTRACTS OF JAPAN vol. 10, no. 2 (M-444), 8 janvier 1986 & JP 60 166509 A (TOYOTA), 29 août 1985,

## Description

La présente invention a pour objet un support hydroélastique destiné à être interposé entre deux ensembles à suspendre l'un par rapport à l'autre, notamment pour la suspension d'un groupe motopropulseur dans une caisse d'un véhicule automobile.

Les supports hydroélastiques comportent généralement deux armatures reliées respectivement aux deux ensembles à suspendre et une masse en matériau élastomère reliant les deux armatures ainsi qu'une chambre de travail et une chambre d'expansion remplies d'un liquide et reliées entre elles par des passages de communication.

Mais, dans les supports hydroélastiques utilisés jusqu'à présent (voir EP-A-0 278 798), la chambre de travail et la chambre d'expansion sont séparées par une paroi rigide et la colonne de liquide est relativement courte et de faible section ce qui ne permet pas de filtrer correctement les vibrations engendrées lors du fonctionnement au ralenti du groupe motopropulseur, de minimiser le bourdonnement et avant tout d'annihiler le mode de hachis des vibrations qui est le mode propre du groupe motopropulseur sur ses appuis lors de l'excitation par la route.

De plus, le montage des supports hydroélastiques utilisés jusqu'à présent est complexe et la protection du matériau en élastomère n'est pas toujours assurée efficacement si bien que cet élastomère peut être agressé et détérioré par de l'huile moteur, de l'huile hydraulique de suspension ou encore du liquide de batterie.

L'invention a pour but d'éviter ces inconvénients en proposant un support hydroélastique compact, dont la conception autorise un vissage par le dessus du support et qui permet de minimiser la masse fixée au sommet de l'axe de liaison avec le groupe motopropulseur et de ce fait d'augmenter la fréquence propre du support, tout en répondant à tous les critères de limitation en attaque et détente longitudinale et transversale.

L'invention a donc pour objet un support hydroélastique destiné à être interposé entre deux ensembles à suspendre l'un par rapport à l'autre, notamment pour la suspension d'un groupe motopropulseur dans une caisse d'un véhicule automobile, du type comportant une armature inférieure et une armature supérieure reliées respectivement aux deux ensembles, une chambre de travail et une chambre d'expansion communiquant entre elles et remplies d'un liquide, caractérisé en ce que la chambre de travail est délimitée par une masse en matériau élastomère d'un corps reliant lesdites armatures et par une masse d'un matériau élastomère d'un organe intermédiaire annulaire disposé à l'intérieur d'une cuvette cylindrique solidaire de l'armature inférieure du corps et la chambre d'expansion est délimitée par la masse en matériau élastomère de l'organe intermédiaire, la cuvette du corps et une membrane d'expansion reliée, à l'une de ses extrémités, par des moyens de liaison, d'une part, avec l'armature supérieure du corps et, d'autre part, avec l'organe intermédiaire annulaire et, à l'autre de ses extrémités, à la partie supérieure de la cuvette de ce corps par un organe de fermeture.

Selon d'autres caractéristiques de l'invention :
- l'armature supérieure du corps est formée par un disque disposé à la partie supérieure de la masse en matériau élastomère de ce corps et comportant un perçage axial pour le positionnement desdits moyens de liaison,
- la masse en matériau élastomère du corps est formée par un cylindre comportant un perçage central tubulaire pour le positionnement d'un axe de support de l'ensemble correspondant à suspendre,
- l'organe intermédiaire annulaire comporte une armature inférieure et une armature supérieure en forme de coupelle reliées entre elles par la masse en matériau élastomère, ladite armature supérieure s'appliquant sur l'armature supérieure du corps et comportant un perçage axial pour le positionnement desdits moyens de liaison,
- la masse en matériau élastomère de l'organe intermédiaire annulaire comporte, sensiblement dans sa partie médiane, un rebord périphérique extérieur de centrage dans la cuvette du corps,
- la masse en matériau élastomère et l'armature inférieure de l'organe intermédiaire comportent un orifice de communication entre la chambre de travail et un canal formé par le rebord périphérique de ladite masse et la cuvette du corps et ledit rebord périphérique comporte une encoche de communication entre le canal et la chambre d'expansion,
- la masse en matériau élastomère du corps intermédiaire comporte un prolongement d'élastomère formant un obstacle entre ledit orifice et ladite encoche de communication,
- la membrane d'expansion comporte, à l'une de ses extrémités, une armature centrale munie desdits moyens de fixation et, à l'autre de ses extrémités, une armature extérieure,
- les moyens de liaison sont formés par une portion cylindrique s'étendant au-dessous de ladite armature centrale et comportant à son extrémité libre un rebord de sertissage avec l'armature supérieure du corps,
- la portion cylindrique comporte un orifice central pour le passage d'un élément de vissage sur l'axe de support de l'élément correspondant à suspendre,
- la membrane d'expansion comporte un rebord périphérique extérieur de positionnement sur le bord supérieur de la cuvette du corps,
- l'organe de fermeture est formé par un couvercle amovible comportant des moyens d'encliquetage sur le bord supérieur de la cuvette du corps et un orifice axial destiné à être obturé par un bouchon relié audit couvercle par une languette,
- l'organe de fermeture est en matériau thermoplastique.

Les caractéristiques et avantages de l'invention apparaîtront au cours de la description qui va suivre, donnée uniquement à titre d'exemple et faite en référence aux dessins annexés, sur lesquels :
- la Fig. 1 est une vue éclatée, en coupe axiale, d'un support hydroélastique conforme à l'invention,
- la Fig. 2 est une vue de dessous de l'organe intermédiaire du support hydroélastique,
- la Fig. 3 est une vue en coupe axiale de ce support hydroélastique, à l'état assemblé.

Le support hydroélastique représenté sur les figures se compose de trois pièces de révolution autour d'un même axe XX' vertical qui sont :
- un corps 10,
- un organe intermédiaire annulaire 20 ou séparateur de chambres,
- une membrane d'expansion 30,
- et un organe de fermeture 40 assurant la protection du support hydroélastique.

Le corps 10 est formé par une armature inférieure 11 en acier qui comporte des pattes 11a de fixation à l'un des ensembles à isoler, comme par exemple la caisse du véhicule automobile, par des organes de vissage, non représentés, passant par des trous de fixation 11b ménagés sur ces pattes 11a.

Le corps 10 comporte également une armature supérieure 12 en acier et en forme de disque comportant un perçage axial 12a.

L'armature inférieure 11 et l'armature supérieure 12 sont reliées entre elles par une masse 13 en matériau élastomère en forme de cylindre.

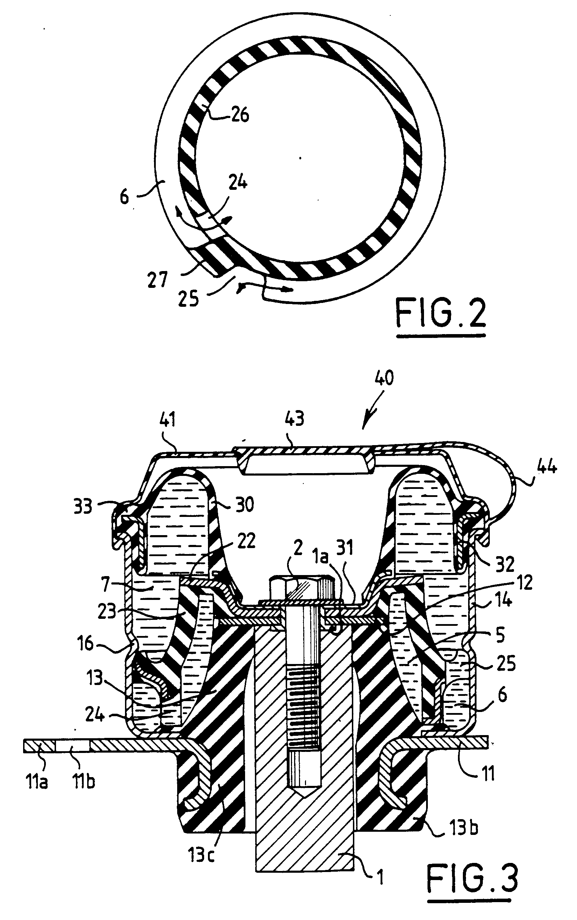

Cette masse 13 est munie d'un perçage central tubulaire 13a pour le passage d'un axe 1 (Fig. 3) de support de l'ensemble correspondant à suspendre, c'est à dire le groupe motopropulseur.

Le corps 10 comporte également une cuvette cylindrique 14 en acier s'étendant vers le haut et coaxiale à la masse 13 en matériau élastomère.

Cette cuvette 14 est par exemple soudée ou sertie sur l'armature inférieure 11.

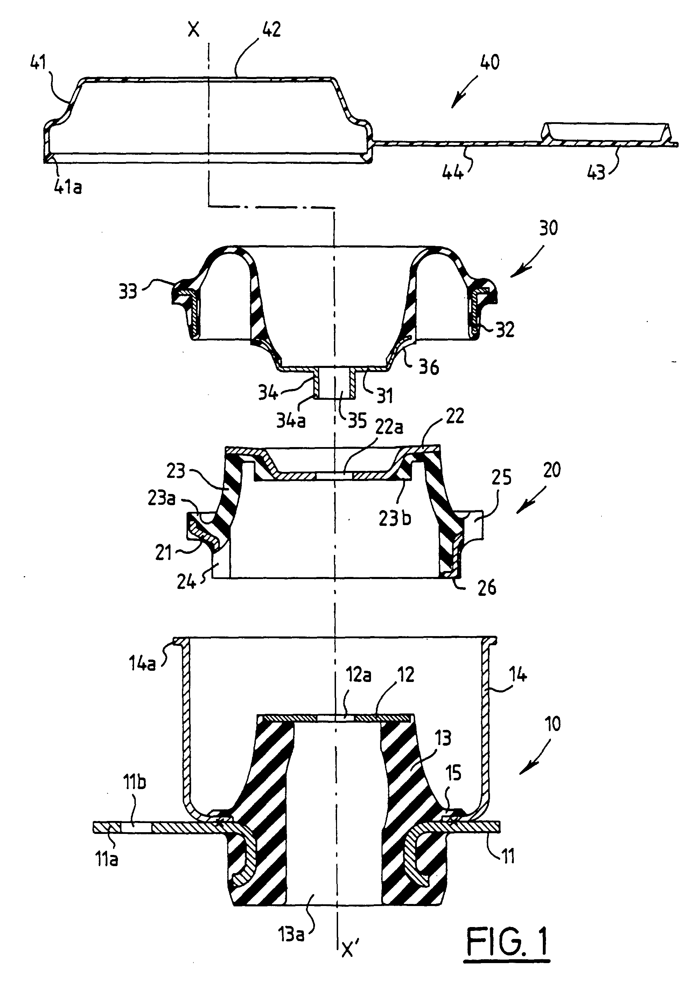

Ainsi que représenté à la Fig. 1, la masse 13 en matériau élastomère comporte un rebord périphérique extérieur 15 surmoulé sur la partie inférieure de la cuvette 14.

L'organe intermédiaire annulaire 20 destiné à être placé à l'intérieur de la cuvette 14 du corps 10 est formé par une armature inférieure 21 en matériau thermoplastique ou en acier, une armature supérieure 22 en acier et en forme de coupelle et une masse 23 en matériau élastomère reliant lesdites armatures 21 et 22 entre elles.

L'armature supérieure 22 est munie d'un perçage axial 22a.

La masse 23 en matériau élastomère de l'organe intermédiaire annulaire 20 comporte, sensiblement dans sa partie médiane, un rebord périphérique extérieur 23a de centrage dans la cuvette 14 du corps 10.

Comme représenté aux Figs. 1 et 2, la masse 23 en matériau élastomère et l'armature inférieure 21 comportent, au-dessous du rebord 23a de ladite masse 23, un orifice 24 et le rebord 23a comporte une encoche 25.

L'organe intermédiaire 20 comporte, à sa partie inférieure une face d'appui 26 de la masse d'élastomère 23 destinée à venir en contact avec le rebord périphérique externe 15 de la masse 13 en matériau élastomère, comme on le verra ultérieurement.

Cette face 26 se prolonge localement par une masse d'élastomère 27 (Fig. 2) qui constitue un obstacle entre l'orifice 24 et l'encoche 25.

Par ailleurs, l'organe intermédiaire 20 comporte à sa partie supérieure et au-dessus de l'armature supérieure 22, un surmoulage 23b de matériau élastomère de la masse 23 destiné à venir en contact avec l'armature supérieure du corps 10.

La membrane d'expansion 30 est formée par une armature centrale 31 en acier et une armature extérieure 32 en acier ou en matériau thermoplastique.

Les armatures 31 et 32 sont reliées entre elles par un matériau élastomère formant la membrane d'expansion 30.

Le membrane d'expansion 30 comporte un surmoulage 36 en matériau élastomère autour du rebord périphérique externe de l'armature centrale 31 et destiné à venir en contact sur l'armature supérieure 22 de l'organe intermédiaire 20.

Cette membrane d'expansion 30 est munie d'un rebord périphérique extérieur 33 de positionnement sur le bord supérieur 14a de la cuvette 14 du corps 10.

L'armature centrale 31 de la membrane 30 comporte des moyens de fixation de cette membrane 30 et de l'organe intermédiaire annulaire 20 sur l'armature supérieure 12 du corps 10.

Ces moyens de liaison sont formés par une portion cylindrique 34 s'étendant au-dessous de l'armature centrale 31 et comportant à son extrémité libre un rebord 34a de sertissage avec l'armature supérieure 12 du corps 10, comme on le verra ultérieurement.

La portion cylindrique 34 est munie d'un orifice central 35 pour le passage d'un élément de vissage 2 sur l'axe de support 1 de l'élément correspondant à suspendre (Fig. 3).

L'organe de fermeture 40 est formé par un couvercle amovible 41 comportant des moyens d'encliquetage sur le bord supérieur de la cuvette 14 du corps 10 et un orifice axial 42 destiné à être obturé par un bouchon 43 relié au couvercle 42 par une languette 44.

Cet organe de fermeture 40 composé du couvercle 41, du bouchon 43 et de la languette 44 constitue une pièce monobloc moulée en une seule opération et en matériau thermoplastique.

Les moyens d'encliquetage du couvercle 41 sur le bord supérieur 14a de la cuvette 14 sont constitués par un rebord en saillie 41a ménagé sur la face interne du couvercle 41 et qui est destiné à venir s'encliqueter sur le bord supérieur 14a de la cuvette 14 lors du montage de l'organe de fermeture 40.

L'assemblage des différents éléments composant le support hydroélastique est réalisé de la façon suivante.

Tout d'abord, l'organe intermédiaire annulaire 20 est mis en place dans la cuvette 14 du corps 10 de telle manière que la surface inférieure de la masse 23 en matériau élastomère vienne s'appliquer sur la portion 15 en matériau élastomère de la masse 13 et que l'armature supérieure 22 de cet organe intermédiaire annulaire 20 vienne s'appliquer sur l'armature supérieure 12 du corps 10, ainsi que représenté à la Fig. 3.

Le rebord périphérique extérieur 23a de la masse 23 en matériau élastomère assure le centrage et le positionnement de l'organe intermédiaire annulaire 20 dans la cuvette 14 du corps 10.

Comme représenté à la Fig. 3, la masse 13 en matériau élastomère du corps 10 et la masse 23 en matériau élastomère de l'organe intermédiaire annulaire 20 forment une chambre de travail 5 et la masse 23 en matériau élastomère de l'organe intermédiaire annulaire 20 et la cuvette 14 du corps 10 forment un canal 6 de grande longueur communiquant avec la chambre de travail 5 par l'orifice 24 ménagé dans la masse 23 en matériau élastomère.

Ensuite, la membrane d'expansion 30 est mise en place en introduisant la portion cylindrique 34 de la membrane centrale 31 dans les perçages 22a et 12a respectivement des armatures supérieures 22 et 12 afin que l'armature centrale 31 de la membrane d'expansion 30 vienne se positionner sur l'armature supérieure 22 de l'organe intermédiaire annulaire 20 et que le rebord périphérique extérieur 33 de cette membrane d'expansion 30 vienne se positionner sur le bord supérieur 14a de la cuvette 14.

L'armature extérieure 32 de la membrane d'expansion 30 assure l'emmanchement de la membrane d'expansion 30 dans la cuvette 14 et le matériau élastomère constituant le rebord 33 assure l'étanchéité périphérique supérieure du support hydroélastique.

La masse 23 en matériau élastomère de l'organe intermédiaire annulaire 20, la cuvette 14 et la membrane d'expansion 30 forment une chambre d'expansion 7 qui communique avec le canal 6 par l'encoche 25 ménagée dans le rebord périphérique extérieur 23a de la masse 23 en matériau élastomère.

La section du canal 6 est déterminée par la quantité de matériau élastomère recouvrant l'armature inférieure 21 de l'organe intermédiaire annulaire 20 et la longueur de ce canal 10 est déterminée par la distance entre l'orifice 24 et l'encoche 25.

La chambre de travail 5 et la chambre d'expansion 7 sont remplies d'un liquide.

La solidarisation de l'organe intermédiaire annulaire 20 et de la membrane d'expansion 30 sur le corps 1 est réalisée en rabattant vers l'extérieur le bord inférieur 34a de la portion cylindrique 34 de façon à sertir l'armature centrale 31 et l'armature supérieure 22 sur l'armature supérieure 12 du corps 10.

L'étanchéité centrale est réalisée grâce à la présence du matériau élastomère 23b au-dessous de l'armature supérieure 22 de l'organe intermédiaire annulaire 20 et par la présence du matériau élastomère 36 au dessous de l'armature centrale 31.

Ainsi que représenté à la Fig. 3, des déformés locales 16 réalisées dans la cuvette 14 empêchent le glissement de l'armature inférieure 21 de l'organe intermédiaire annulaire 20 dans ladite cuvette 14.

L'organe de fermeture 40 est encliqueté sur le bord supérieur 14a de la cuvette 14 et maintient donc la membrane d'expansion 30.

Le support hydroélastique ainsi assemblé est livré avec le bouchon 43 non refermé.

Le montage du support hydroélastique sur la caisse du véhicule automobile est réalisé en introduisant l'axe de support 1 dans le perçage tubulaire 13a de la masse 13 en matériau élastomère du corps 10 et l'élément de vissage 2 est introduit par la partie supérieure du support hydroélastique et vissé sur l'axe de support 1, comme représenté à la Fig. 3.

Lorsque le support hydroélastique repose sur l'axe de fixation 1 et est bloqué par l'élément de vissage 2, le bouchon 43 est rabattu dans l'orifice 42 de façon à obturer la partie supérieure du support hydroélastique et à assurer l'étanchéité de ce support hydroélastique.

L'axe de support 1 comporte, comme représenté à la Fig. 3, à sa partie supérieure un logement la permettant le passage du bord 34a de la portion cylindrique 34 lorsqu'il est rabattu pour réaliser le sertissage.

Le support hydroélastique selon l'invention fonctionne de la manière suivante.

Sous les excitations ou les déplacements verticaux exercés par le groupe motopropulseur sur la masse 13 en matériau élastomère du corps 10, cette masse 13 qui délimite la chambre de travail 5 avec la masse 23 en matériau élastomère de l'organe intermédiaire annulaire 20, tend à faire passer le liquide vers la chambre d'expansion 7 par le canal 6 ou inversement.

La présence de la masse d'élastomère 27 entre l'orifice 24 et l'encoche 25 oblige le liquide à parcourir la colonne 6 sur toute sa longueur qui est grande par rapport à son diamètre.

La grande tenue à la pression de l'élastomère de la masse 13 du corps 10 nécessite un ajustement de la rigidité de tenue à la pression de la masse 23 en matériau élastomère de l'organe intermédiaire annulaire 20.

D'autre part, la section et la longueur du canal 6 sont ajustées en fonction du mode propre à amortir.

La limitation des débattements en attaque est assurée par la saturation de l'élastomère de la masse 13 du corps 10 sur l'axe de support 1.

En effet, l'écrasement de cet élastomère, lors d'un effort vertical exercé vers le bas du véhicule automobile, tend à appuyer cette masse 13 en matériau élastomère sur l'axe de support 1 en supprimant tout jeu.

Cela provoque un confinement de la matière avec une augmentation très importante de la raideur du support hydroélastique dans tous les plans.

D'autre part, la limitation des débattements en détente est assurée par une coupelle, non représentée, située à la partie inférieure de l'axe de support 1 et qui vient comprimer le matériau en élastomère 13b surmoulé sur l'armature inférieure 11 du corps 10.

Par ailleurs, la limitation des déplacements longitudinaux et transversaux est assurée par l'élastomère 13c de la masse 13 surmoulé sur l'armature inférieure 11 du corps 10.

Lors des débattements transversaux, cette coupelle tend à se rapprocher de la cuvette 14.

Du fait de l'augmentation de la raideur comme indiqué précédemment, lors de l'application de gros efforts, les armatures 11 et 12 du corps 10 n'entrent pas en contact.

En cas de rupture de la partie hydraulique du support hydroélastique, la masse 13 en matériau élastomère assure toujours la fonction de suspension du groupe motopropulseur sans altérer le filtrage.

La distance entre la face inférieure de l'armature supérieure 22 de l'organe intermédiaire annulaire 20 et la face supérieure de l'armature inférieure 11 du corps 10 est déterminée pour que le point de passage de l'effort de cisaillement se trouve au niveau du centre élastique de la masse 13 en matériau élastomère, c'est à dire sensiblement à mi-hauteur de cette masse 13 en matériau élastomère.

Le support hydroélastique à axe traversant selon l'invention présente l'avantage de pouvoir être vissé par le dessus ce qui simplifie son montage.

Il a également pour avantage de minimiser la masse fixée au sommet de l'axe de liaison, ce qui permet d'augmenter la fréquence propre du support hydroélastique.

Le support hydroélastique selon l'invention est compact, facile à monter et répond à tous les critères de limitation en attaque, détente longitudinale et transversale.

Le support hydroélastique selon l'invention présente un autre avantage qui réside dans sa protection totale.

En effet, grâce à la présence de l'organe de fermeture constitué par le couvercle et le bouchon, aucune masse en matériau élastomère n'est apparente ce qui évite que ces masses puissent être agressées par des agents extérieurs comme de l'huile moteur, de l'huile hydraulique de suspension ou du liquide de batterie.

## Revendications

1. Support hydroélastique destiné à être interposé entre deux ensembles à suspendre l'un par rapport à l'autre, notamment pour la suspension d'un groupe motopropulseur dans une caisse d'un véhicule automobile, du type comportant une armature inférieure (11) et une armature supérieure (12) reliées respectivement aux deux ensembles, une chambre de travail (5) et une chambre d'expansion (7) communiquant entre elles et remplies d'un liquide, caractérisé en ce que la chambre de travail (5) est délimitée par une masse (13) en matériau élastomère d'un corps (10) reliant lesdites armatures (11, 12) et par une masse (23) en matériau élastomère d'un organe intermédiaire annulaire (20) disposé à l'intérieur d'une cuvette cylindrique (14) solidaire de l'armature inférieure (11) du corps (10) et la chambre d'expansion (7) est délimitée par la masse (23) en matériau élastomère de l'organe intermédiaire annulaire (20), la cuvette (14) du corps (10) et une membrane d'expansion (30) reliée, à l'une de ses extrémités, par des moyens (34, 34a) de liaison, d'une part, avec l'armature supérieure (12) du corps (10) et, d'autre part, avec l'organe intermédiaire annulaire (20) et, à l'autre de ses extrémités, à la partie supérieure de la cuvette (14) de ce corps (10) par un organe de fermeture (40).

2. Support hydroélastique selon la revendication 1, caractérisé en ce que l'armature supérieure (12) du corps (10) est formée par un disque disposé à la partie supérieure de la masse (13) en matériau élastomère de ce corps (10) et comportant un perçage axial (12a) pour le positionnement desdits moyens de liaison (34, 34a).

3. Support hydroélastique selon les revendications 1 et 2, caractérisé en ce que la masse (13) en matériau élastomère du corps (10) est formée par un cylindre comportant un perçage central tubulaire (13a) pour le positionnement d'un axe (1) de support de l'ensemble correspondant à suspendre.

4. Support hydroélastique selon la revendication 1, caractérisé en ce que l'organe intermédiaire annulaire (20) comporte une armature inférieure (21) et une armature supérieure (22) en forme de coupelle reliées entre elles par la masse (23) en matériau élastomère, ladite armature supérieure (22) s'appliquant sur l'armature supérieure (12) du corps (10) et comportant un perçage axial (22a) pour le positionnement desdits moyens de liaison (34, 34a).

5. Support hydroélastique selon les revendications 1 et 4, caractérisé en ce que la masse (23) en matériau élastomère de l'organe intermédiaire annulaire (20) comporte, sensiblement dans sa partie médiane, un rebord périphérique extérieur (25) de centrage dans la cuvette (14) du corps (10).

6. Support hydroélastique selon les revendications 1 et 5, caractérisé en ce que la masse (23) en matériau élastomère et l'armature inférieure (21) de l'organe intermédiaire annulaire (20) comportent un orifice (24) de communication entre la chambre de travail (5) et un canal (6) délimité par le rebord périphérique extérieur (23a) de ladite masse (23) et la cuvette (14) du corps (10) et ledit rebord périphérique extérieur (23a) comporte une encoche (25) de communication entre le canal (6) et la chambre d'expansion (7).

7. Support hydroélastique selon la revendication 6, caractérisé en ce que la masse (23) en matériau élastomère comporte un prolongement d'élastomère (27) formant un obstacle entre l'orifice (24) et l'encoche (25).

8. Support hydroélastique selon la revendication 1, caractérisé en ce que la membrane d'expansion (30) comporte, à l'une de ses extrémités, une armature centrale (31) munie desdits moyens de liaison (34, 34a) et, à l'autre de ses extrémités, une armature extérieure (32).

9. Support hydroélastique selon l'une quelconque des revendications 1, 2, 4 ou 8, caractérisé en ce que les moyens de liaison sont formés par une portion cylindrique (34) s'étendant au-dessous de ladite armature centrale (31) et comportant, à son extrémité libre, un rebord (34a) de sertissage avec l'armature supérieure (12) du corps (10).

10. Support hydroélastique selon les revendications 3 et 9, caractérisé en ce que la portion cylindrique (34) comporte un orifice central (35) pour le passage d'un élément de vissage (2) sur l'axe de support (1) de l'élément correspondant à suspendre.

11. Support hydroélastique selon la revendication 1, caractérisé en ce que la membrane d'expansion (30) comporte un rebord périphérique extérieur (33) de positionnement sur le bord supérieur (14a) de la cuvette (14) du corps (10).

12. Support hydroélastique selon la revendication 1, caractérisé en ce que l'organe de fermeture (40) est formé par un couvercle amovible (41) comportant des moyens (41a) d'encliquetage sur le bord supérieur (14a) de la cuvette (14) du corps (10) et un orifice axial (42) destiné à être obturé par un bouchon (43) relié audit couvercle (41) par une languette (44).

13. Support hydroélastique selon la revendication 12, caractérisé en ce que l'organe de fermeture (40) est en matériau thermoplastique.

## Patentansprüche

1. Hydrolager zur Einfügung zwischen zwei in Bezug aufeinander aufzuhängende Einheiten, insbesondere für die Aufhängung einer Motorenanlage in der Karosserie eines Fahrzeugs eines Typs, der eine untere Armierung (11) und eine obere Armierung(12), die jeweils mit den beiden Einheiten verbunden sind, sowie eine Arbeitskammer (5) und eine Ausdehnungskammer (7), die miteinander verbunden und mit einer Flüssigkeit gefüllt sind, aufweist, dadurch gekennzeichnet, dass die Arbeitskammer (5) durch eine Elastomermasse (13) eines Körpers (10), der die besagten Armaturen (11, 12) verbindet, und durch eine Elastomermasse (23) eines ringförmigen Zwischenteils (20), welches innerhalb eines zylindrischen Gehäuses (14) angeordnet ist und mit der unteren Armierung (11) des Körpers (10) eine Einheit bildet, begrenzt ist, wobei der Ausdehnungsraum (7) durch die Elastomermasse (23) des ringförmigen Zwischenteils (20), das Gehäuse (14) des Körpers (10) und eine Ausdehnungsmembran (30) begrenzt ist, die durch Verbindungsteile (34, 34a) an ihrem einen Ende einerseits mit der oberen Armierung (12) des Körpers (10), andererseits mit dem ringförmigen Zwischenteil (20), und an ihrem anderen Ende durch ein Schließteil (40) mit dem oberen Teil des Gehäuses (14) des Körpers (10) verbunden ist.

2. Hydrolager nach Anspruch 1, dadurch gekennzeichnet, dass die obere Armierung (12) des Körpers (10) aus einer Scheibe besteht, die sich auf dem oberen Teil der Elastomermasse (13) dieses Körpers (10) befindet und zur Positionierung der besagten Verbindungsteile (34, 34a) eine axiale Bohrung (12a) aufweist.

3. Hydrolager nach den Ansprüchen 1 und 2, dadurch gekennzeichnet, dass die Elastomermasse (13) des Körpers (10) aus einem Zylinder besteht, der zur Positionierung einer Unterstützungsachse (1) der entsprechenden aufzuhängenden Einheit in seiner Mitte eine röhrenförmige Bohrung (13a) aufweist.

4. Hydrolager nach Anspruch 1, dadurch gekennzeichnet, dass das ringförmige Zwischenteil (20) eine schalenförmige untere Armierung (21) und eine schalenförmige obere Armierung (22) aufweist, die miteinander durch die Elastomermasse (23) verbunden sind, wobei die obere Armierung (22) auf die obere Armatur (12) des Körpers (10) passt und zur Positionierung der besagten Verbindungsteile (34, 34a) eine axiale Bohrung (22a) enthält.

5. Hydrolager nach den Ansprüchen 1 und 4, dadurch gekennzeichnet, dass die Elastomermasse (23) des ringförmigen Zwischenteils (20), deutlich in ihrem Mittelteil, einen peripheren äußeren Rand (25) zur Zentrierung im Gehäuse (14) des Körpers (10) aufweist.

6. Hydrolager nach den Ansprüchen 1 und 5, dadurch gekennzeichnet, dass die Elastomermasse (23) und die untere Armierung (21) des ringförmigen Zwischenteiles (20) eine Verbindungsöffnung (24) zwischen der Arbeitskammer (5) und einem durch den peripheren äußeren Rand (23a) der besagten Masse (23) und das Gehäuse (14) des Körpers (10) begrenzten Kanal (6) enthält, wobei der besagte periphere äußere Rand (23a) eine verbindende Aussparung (25) zwischen dem Kanal (6) und der Ausdehnungskammer (7) aufweist.

7. Hydrolager nach Anspruch 6, dadurch gekennzeichnet, dass die Elastomermasse (23) eine Elastomerverlängerung (27) als Hindernis zwischen der Öffnung (24) und der Aussparung (25) aufweist.

8. Hydrolager nach Anspruch 1, dadurch gekennzeichnet, dass die Ausdehnungsmembran (30) an ihrem einen Ende eine mittlere Armierung (31), die mit den besagten Verbindungsteilen (34, 34a) versehen ist, und an ihrem anderen Ende eine äußere Armierung(32) aufweist.

9. Hydrolager nach einem der Ansprüche 1, 2, 4 oder 8, dadurch gekennzeichnet, dass die Verbindungsteile aus einem zylindrischen Teil (34) gebildet sind, der sich unter der besagten mittleren Armierung erstreckt und an seinem freien Ende einen Rand zum Einsetzen der oberen Armierung (12) des Körpers (10) aufweist.

10. Hydrolager nach den Ansprüchen 3 und 9, dadurch gekennzeichnet, dass der zylindrische Teil (34) eine zentrale Öffnung (35) zur Durchführung eines Schraubverbindungselements (2) auf die Unterstützungsachse (1) der entsprechenden aufzuhängenden Einheit aufweist.

11. Hydrolager nach Anspruch 1, dadurch gekennzeichnet, dass die Ausdehnungsmembran (30) einen peripheren äußeren Rand (33) zur Positionierung auf den oberen Rand (14a) des Gehäuses (14) des Körpers (10) aufweist.

12. Hydrolager nach Anspruch 1, dadurch gekennzeichnet, dass die Schließvorrichtung (40) aus einem abnehmbaren Deckel (41) mit Einrastungsteilen (41a) auf dem oberen Rand (14a) von Gehäuse (14) des Körpers (10) und aus einer zur Verschließung durch einen mit dem besagten Deckel (41) mittels einer Lasche (44) verbundenen Verschluss (43) bestimmten axialen Öffnung besteht.

13. Hydrolager nach Anspruch 12, dadurch gekennzeichnet, dass das Schließteil (40) aus einem thermoplastischen Stoff besteht.

## Claims

1. Hydroresilient support to be interposed between two assemblies that are to be suspended relative to one another, especially for the suspension of a motive power unit in a body of a motor vehicle, the support being of the type comprising a lower brace (11) and an upper brace (12) which are respectively connected to the two assemblies, and a working chamber (5) and an expansion chamber (7) which communicate with one another and which are filled with a liquid, characterised in that the working chamber (5) is delimited by a mass (13) of elastomeric material of a body (10) connecting the braces (11, 12) and by a mass (23) of elastomeric material of an annular intermediate member (20) arranged inside a cylindrical chamber (14) which is fixedly joined to the lower brace (11) of the body (10), and the expansion chamber (7) is delimited by the mass (23) of elastomeric material of the annular intermediate member (20), the chamber (14) of the body (10) and an expansion membrane (30) which is connected, at one of its ends, by means (34, 34a) for connection, on the one hand, to the upper brace (12) of the body (10) and, on the other hand, to the annular intermediate member (20) and, at the other of its ends, to the upper portion of the chamber (14) of the body (10) by a closure member (40).

2. Hydroresilient support according to claim 1, characterised in that the upper brace (12) of the body (10) is formed by a disc which is arranged at the upper portion of the mass (13) of elastomeric material of that body (10) and which comprises an axial drilled hole (12a) for positioning the connecting means (34, 34a).

3. Hydroresilient support according to claims 1 and 2, characterised in that the mass (13) of elastomeric material of the body (10) is formed by a cylinder comprising a tubular central drilled hole (13a) for positioning a shaft (1) for supporting the corresponding assembly to be suspended.

4. Hydroresilient support according to claim 1, characterised in that the annular intermediate member (20) comprises a lower brace (21) and an upper brace (22) in cupel form which are connected to one another by the mass (23) of elastomeric material, the upper brace (22) fitting on the upper brace (12) of the body (10) and comprising an axial drilled hole (22a) for positioning the connecting means (34, 34a).

5. Hydroresilient support according to claims 1 and 4, characterised in that the mass (23) of elastomeric material of the annular intermediate member (20) comprises, substantially in its median portion, an external peripheral flange (23a) for centring in the chamber (14) of the body (10).

6. Hydroresilient support according to claims 1 and 5, characterised in that the mass (23) of elastomeric material and the lower brace (21) of the annular intermediate member (20) comprise an opening (24) for communication between the working chamber (5) and a duct (6) delimited by the external peripheral flange (23a) of the mass (23) and the chamber (14) of the body (10), and the external peripheral flange (23a) comprises a notch (25) for communication between the duct (6) and the expansion chamber (7).

7. Hydroresilient support according to claim 6, characterised in that the mass (23) of elastomeric material comprises an elastomeric extension (27) forming an obstacle between the opening (24) and the notch (25).

8. Hydroresilient support according to claim 1, characterised in that the expansion membrane (30) comprises, at one of its ends, a central brace (31) provided with the connecting means (34, 34a) and, at the other of its ends, an external brace (32).

9. Hydroresilient support according to any one of claims 1, 2, 4 and 8, characterised in that the connecting means are formed by a cylindrical portion (34) extending below the central brace (31) and comprising, at its free end, a flange (34a) for crimping with the upper brace (12) of the body (10).

10. Hydroresilient support according to claims 3 and 9, characterised in that the cylindrical portion (34) comprises a central opening (35) for the passage of a screwing element (2) on the support shaft (1) of the corresponding element to be suspended.

11. Hydroresilient support according to claim 1, characterised in that the expansion membrane (30) comprises an external peripheral flange (33) for positioning on the upper edge (14a) of the chamber (14) of the body (10).

12. Hydroresilient support according to claim 1, characterised in that the closure member (40) is formed by a removable lid (41) comprising means (41a) for snapping onto the upper edge (14a) of the chamber (14) of the body (10) and an axial opening (42) which is to be closed by a plug (43) connected to the lid (41) by a tongue (44).

13. Hydroresilient support according to claim 12, characterised in that the closure member (40) is of thermoplastic material.
